# EUROPEAN PATENT APPLICATION

(11) **EP 2 723 096 A1**
(43) Date of publication of application: **23.04.2014**
(21) Application number: 12851669.7
(22) Date of filing: 22.05.2012
(51) Int. Cl.: H04N 21/6405, H04N 21/6377, H04N 21/21, H04L 12/18, H04L 29/12

(54) **METHOD, SYSTEM AND MEDIA SERVER FOR CREATING MULTICAST CHANNEL**

(30) Priority: 24.11.2011 CN 201110377931; 17.02.2012 CN 201210037317
(71) Applicant: ZTE Corporation, Shenzhen, Guangdong 518057 (CN)
(72) Inventor: DONG, Hong, Shenzhen Guangdong 518057 (CN)
(74) Representative: Zerbi, Guido Maria
(86) International application number: PCT/CN2012/075847
(87) International publication number: WO 2013/075471

(57) **Abstract**

A method, system and media server for creating a multicast channel, wherein, the method for creating a multicast channel includes: a media server receiving a command for creating a multicast channel from a client, the command carrying a channel number and a multicast address of the multicast channel to be created and an interface address of the media server; the media server binding, according to the command, the multicast channel identified by the channel number to the interface identified by the interface address of the media server, and obtaining port information of the interface; the media server creating, according to the port information and the multicast address, the multicast channel from a port identified by the port information to a multicast group identified by the multicast address. In the above method, system and media server for creating a multicast channel, by binding the multicast channel to the interface, one multicast channel only occupies one multicast routing entry of the switch, thereby more multicast channels can be supported.

## Description

### Technical Field

The present document relates to the field of Interactive Personality Television (IPTV) application, and in particular, to a method, system and media server for creating a multicast channel.

### Background of the Related Art

Compared with the unicast technology, the multicast technology has an advantage that the network bandwidth does not change with the increase of the number of users linearly on the basis of the equivalent transmission efficiency, which can effectively save the load of the IPTV media server and the bear network. Therefore, in order to efficiently and economically deploy the IPTV services, the multicast technology is adopted mostly to perform the end-to-end media stream push. The live program is conveyed to the user terminal through the bear network, and there are two kinds of multicast modes: a dynamic multicast mode and a static multicast mode. In the dynamic multicast mode, devices such as switches only receive and issue the program of a certain channel (a multicast group) after receiving a first user join request of the channel; while when a last user of the channel (multicast group) exits, the switch will stop receiving the multicast stream. The static multicast mode statically configures the multicast routing entries and forwarding entries of various channels (multicast group) on the switch device, and no matter whether the down-connected user watches, the multicast stream has been issued to the network element device. In the static multicast mode, the switching speed of the channels of the user is quick, and the service perception is good, but there is a large demand on the bandwidth of the network; and the dynamic multicast can enable the minimization of the network traffic under all circumstances, but there may be a certain delay when the user receives a new channel (multicast group). Now, the static multicast mode is mostly used to enhance the user experience.

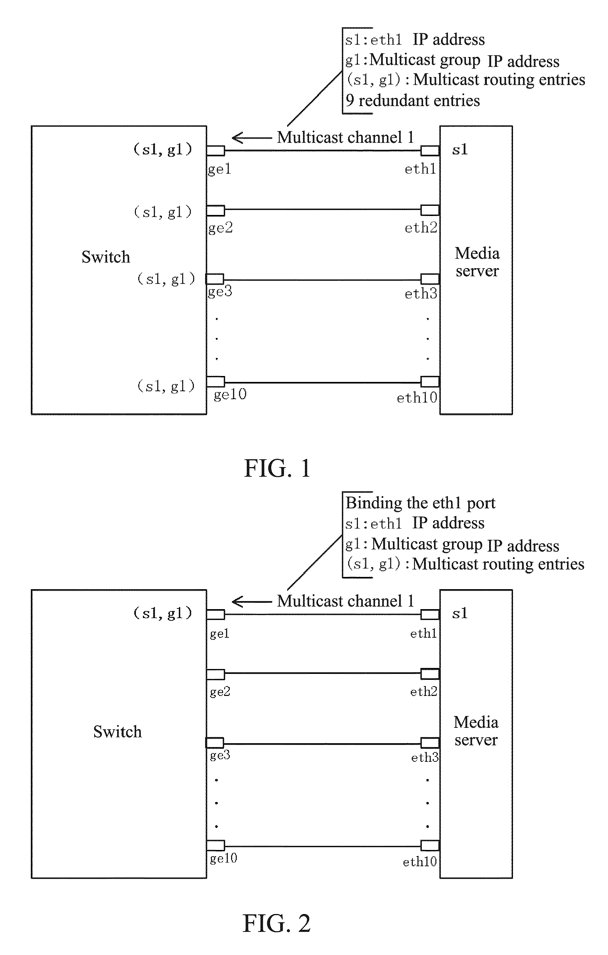

IPTV media servers generally have multiple media, which are used to receive program streams and to provide live services etc. outward, and all these interfaces are managed uniformly, and each multicast channel may be transmitted from any one interface, and thus the number of static multicast routing entries formed on the directly-connected data device is the number of interfaces multiplied by the number of multicast channels. Fig. 1 describes a condition of multicast routing entries of a multicast channel formed on a switch, 10 interfaces of the media server are connected to the switch, one multicast channel transmitted from an interface of the Ethernet (eth) 1 needs to form 10 multicast routing entries (s1, g1) on the switch, and 9 entries corresponding to ge2∼ge10 formed on the switch are redundant entries. When 300 channels are created, there needs to form 300 entries on the switch, while the number of the multicast entries on the switch is limited, which is generally between 1000 and 2000, which limits the number of the multicast channels of the media server.

### Summary of the Invention

The embodiments of the present document provide a method, system and media server for creating a multicast channel, to solve the problem that excessive multicast routing entries are formed on a switch by the existing multicast channel.

The embodiments of the present document provide a method for creating a multicast channel, comprising:
a media server receiving a command for creating a multicast channel from a client, the command carrying a channel number and a multicast address of the multicast channel to be created and an interface address of the media server;
the media server binding, according to the command, the multicast channel identified by the channel number to the interface identified by the interface address of the media server, and obtaining port information of the interface;
the media server creating, according to the port information and the multicast address, the multicast channel from a port identified by the port information to a multicast group identified by the multicast address.

Preferably, after the media server receives the command for creating a multicast channel, the method further comprises: the media server storing a binding relation table of the multicast channel and the interface.

Preferably, after the media server stores a binding relation table of the channel and the interface, the method further comprises: after the media server detects that an abnormality of the created multicast channel occurs, obtaining the interface information bound to the multicast channel according to the stored binding relation table, and recreating the multicast channel according to the obtained interface information.

Preferably, the media service recreating the multicast channel according to the obtained interface information comprises:
the media server obtaining port information of the interface identified by the interface information according to the obtained interface information;
the media server obtaining the multicast address of the multicast channel;
the media server recreating the multicast channel from a port identified by the port information to a multicast group identified by the multicast address.

Preferably, the method is applied in a static multicast mode.

The embodiments of the present document further provide a media server, comprising a service processing module, a database module and a live distributing module, wherein,
the service processing module is configured to receive a command from a client, which carries a channel number and a multicast address of a multicast channel to be created and an interface address of the media server, for creating the multicast channel; bind, according to the command, the multicast channel identified by the channel number to the interface identified by the interface address of the media server; transmit a resource apply request to the database module; and transmit a creation command to the live distributing module;
the database module is configured to obtain port information of the interface identified by the interface address of the media server according to the resource apply request transmitted by the service management module, and return the port information to the service processing module;
the live distributing module is configured to receive the creation command transmitted by the service processing module, create the multicast channel from a port identified by the port information to a multicast group identified by the multicast address according to the port information and the multicast address carried in the creation command.

Preferably, the database module is further configured to receive a binding relation between the multicast channel and the interface transmitted by the service processing module, and store a binding relation table of the multicast channel and the interface.

Preferably, the service processing module is further configured to regularly detect whether an abnormality of the created multicast channel occurs, if it is detected that the abnormality of the multicast channel occurs, enquire the database module to obtain the interface information bound to the multicast channel and port information of an interface identified by the interface information, and transmit a recreation command to the live distributing module;
the live distributing module is further configured to receive the recreation command transmitted by the service processing module, recreate the multicast channel from the port identified by the interface information to a multicast group identified by the multicast address according to the port information and the multicast address of the multicast channel carried in the recreation command.

Preferably, the media server is applied in a static multicast mode.

The embodiments of the present document further provide a system for creating a multicast channel, comprising a media server and a client, wherein,
the media server in use is the media server described above;
the client is configured to transmit a command for creating a multicast channel to the media server.

In the above method, system and media server for creating a multicast channel, by binding the multicast channel to the interface, one multicast channel only occupies one multicast routing entry of the switch, thereby more multicast channels can be supported.

### Brief Description of Drawings

Fig. 1 is a diagram of multicast routing entries of a multicast channel formed on a switch;
Fig. 2 is a diagram of entries formed on a switch after a multicast channel is bound to an interface according to the present document;
Fig. 3 is a structural diagram of an embodiment of a media server according to the present document;
Fig. 4 is a structural diagram of an embodiment of a system for creating a multicast channel according to the present document; and
Fig. 5 is a flowchart of signaling of an embodiment of creating a multicast channel according to the present document.

### Preferred Embodiments of the Invention

In order to make the purpose, technical schemes and advantages of the present document more clear and apparent, the embodiments of the present document will be described in detail hereinafter in combination with accompanying drawings. It should be illustrated that, embodiments in the present application and features in the embodiments can be randomly combined with each other without conflict.

The embodiments of the present document provide a method for creating a multicast channel, which is applied in a static multicast mode, wherein, the method comprises the following steps.
in step one, a media server receives a command for creating a multicast channel, the command carrying a channel number and a multicast address of the multicast channel to be created and an interface address of the media server;
in step two, the media server binding, according to the command, the multicast channel identified by the channel number to the interface identified by the interface address of the media server, and obtaining port information of the interface;
in step three, the media server creating, according to the port information and the multicast address, the multicast channel from a port identified by the port information to a multicast group identified by the multicast address.

In addition, after the media server receives the command for creating a multicast channel, the method further comprises: the media server storing a binding relation table of the multicast channel and the interface. The purpose of storing the binding relation table is to find an interface bound to the channel again according to the binding relation table after an abnormality of the multicast channel occurs, and specifically, after the media server stores a binding relation table of the channel and the interface, the method further comprises: after the media server detects that an abnormality of the created multicast channel occurs, obtaining the interface information bound to the multicast channel according to the stored binding relation table, and recreating the multicast channel according to the obtained interface information. Wherein, the media service recreating the multicast channel according to the obtained interface information comprises: the media server obtaining port information of the interface identified by the interface information according to the obtained interface information; the media server obtaining the multicast address of the multicast channel; the media server recreating the multicast channel from a port identified by the port information to a multicast group identified by the multicast address.

The above embodiment describes a method for supporting more multicast channels in a network environment with limited IPTV multicast entries, and the embodiment binds the multicast channel to the interface, one multicast channel is designated to be transmitted from a certain interface, and as shown in Fig. 2, it describes a condition of entries formed on a switch after the multicast channel is bound to the interface, wherein, the multicast channel 1 is bound to eth1, which will only form one entry corresponding to ge1 on the switch, thus largely reducing the occupation of the multicast routing entries of the switch, and thereby increasing the number of the multicast channels supported by the media server.

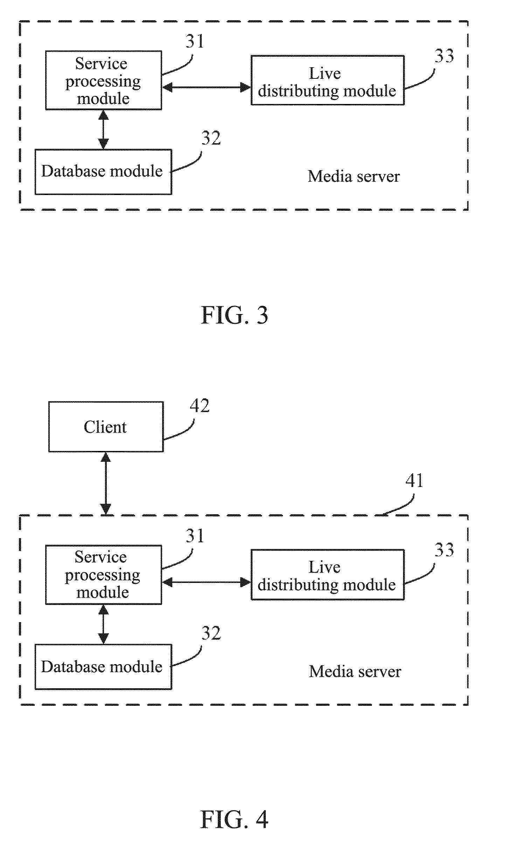

As shown in Fig. 3, a structural diagram of an embodiment of a media server according to the present document is illustrated, wherein, the media server comprises a service processing module 31, a database module 32 and a live distributing module 33, wherein,
the service processing module 31 is used to receive a command from a client, which carries a channel number and a multicast address of the multicast channel to be created and an interface address of the media server, for creating a multicast channel; bind, according to the command, the multicast channel identified by the channel number to the interface identified by the interface address of the media server; transmit a resource apply request to the database module 32; and transmit a creation command to the live distributing module 33; the database module 32 is used to obtain port information of the interface identified by the interface address of the media server according to the resource apply request transmitted by the service management module 31, and returning the port information to the service processing module 31;
the live distributing module 33 is used to receive the creation command transmitted by the service processing module 31, create the multicast channel from a port identified by the port information to a multicast group identified by the multicast address according to the port information and the multicast address carried in the creation command.

In order to recreate the multicast channel after an abnormality of the above multicast channel occurs, the database module 32 is further used to receive a binding relation between the multicast channel and the interface transmitted by the service processing module, and store a binding relation table of the multicast channel and the interface. The service processing module 31 is further used to regularly detect whether an abnormality of the created multicast channel occurs, if it is detected that the abnormality of the multicast channel occurs, enquire the database module to obtain the interface information bound to the multicast channel and port information of an interface identified by the interface information, and transmit a recreation command to the live distributing module; and the live distributing module 33 is further used to receive the recreation command transmitted by the service processing module, recreate the multicast channel from the port identified by the interface information to a multicast group identified by the multicast address according to the port information and the multicast address of the multicast channel carried in the recreation command.

In addition, the present document further provides a system for creating a multicast channel, comprising a media server 41 and a client 42, wherein, the client 42 has a channel creation human-computer interface, for transmitting a command for creating a multicast channel to the media server 41, and the structure and function of the media server 41 are the same as those of the media server shown in Fig. 3, and will not be described here again, and the structure of the system is shown in Fig. 4.

In the case of the above system being in the static multicast mode, one multicast channel only occupies one multicast routing entry of the switch, and therefore more multicast channels can be supported.

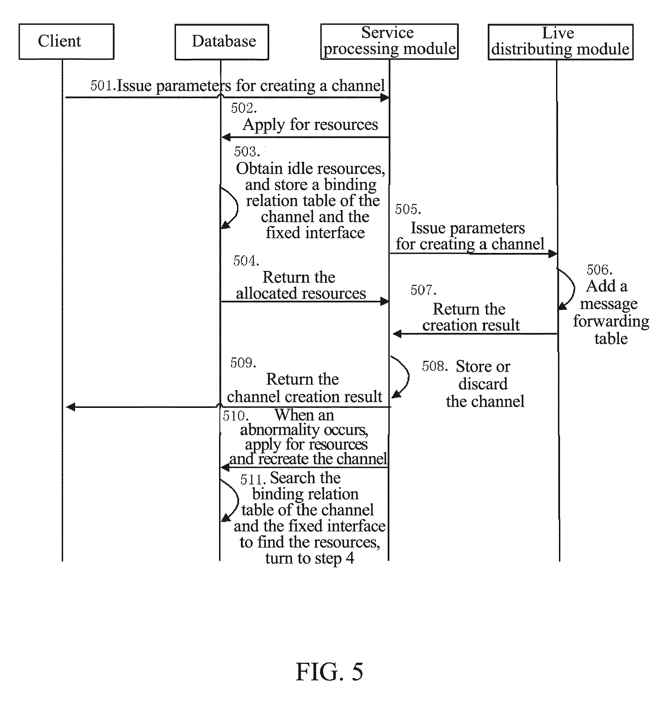

As shown in Fig. 5, it is a flowchart of signaling of an embodiment of creating a multicast channel according to the present document, and the process includes the following steps.

In step 501, a client issues a command for creating a multicast channel, the command carries the following parameters: a channel number, a multicast IP, an interface IP of the media server etc.;
in step 502, a service processing module applies for resources from a database module after receiving the command for creating a multicast channel;
the resources here are port information;
the service processing module binds the channel to a specific interface of the media server, and as shown in Fig. 2, the multicast channel 1 is transmitted only from eth1 port;
in step 503, it is to search for resources in a database;
a binding relation table of the multicast channel and the interface is stored in the database;
in step 504, the database returns the allocated resources to the service processing module;
in step 505, the service processing module issues a command for creating a channel to the live distributing module;
in step 506, the live distributing module opens one channel according to related parameters;
the live distributing module creates the multicast channel according to the port information and the multicast address;
in step 507, the live distributing module returns a channel creation result;
in step 508, the service processing module determines whether the channel information is stored or discarded according to the result;
in step 509, the service processing module returns the channel creation result to the client;
in step 510, when an abnormality of the channel occurs, the channel needs to be recreated, and the service processing module applies for resources from the database module;
in step 511, the database module finds the interface information bound to the abnormal channel, and it is to turn to step 504.

Since the database stores the binding relation table of the multicast channel and the interface, the interface information bound to the abnormal channel can be found, and thus the message is still transmitted from the interface identified by the interface information, which ensures that one multicast channel only occupies one multicast routing entry, thereby more multicast channels can be supported.

A person having ordinary skill in the art can understand that all or a part of steps in the above method can be implemented by programs instructing related hardware, and the programs can be stored in a computer readable storage medium, such as a read-only memory, disk or CD-ROM etc. Alternatively, all or a part of steps in the above embodiments can also be implemented by one or more integrated circuits. Accordingly, each module/unit in the above embodiments can be implemented in a form of hardware, and can also be implemented in a form of software functional module. The present document is not limited to a combination of any particular forms of hardware and software.

The above embodiments are only used to illustrate the technical scheme of the present document without limitation, and the present document is only described in detail with reference to the preferred embodiments. It should be understood by a person having ordinary skill in the art that, modifications or equivalent substitutions can be made to the technical schemes of the present document without departing from the spirit and scope of the technical scheme of the present document, and should be contained within the scope of the claims of the present document.

### Industrial Applicability

In the above method, system and media server for creating a multicast channel, by binding the multicast channel to the interface, one multicast channel only occupies one multicast routing entry of the switch, thereby more multicast channels can be supported.

## Claims

1. A method for creating a multicast channel, comprising:
a media server receiving a command for creating a multicast channel from a client, the command carrying a channel number and a multicast address of the multicast channel to be created and an interface address of the media server;
the media server binding, according to the command for creating a multicast channel, the multicast channel identified by the channel number to the interface identified by the interface address of the media server, and obtaining port information of the interface;
the media server creating, according to the port information and the multicast address, the multicast channel from a port identified by the port information to a multicast group identified by the multicast address.

2. The method according to claim 1, wherein,
after the media server receives the command for creating a multicast channel, the method further comprises:
the media server storing a binding relation table of the multicast channel and the interface.

3. The method according to claim 2, wherein,
after the media server stores the binding relation table of the channel and the interface, the method further comprises:
after the media server detects that an abnormality of the created multicast channel occurs, obtaining interface information bound to the multicast channel according to the stored binding relation table, and recreating the multicast channel according to the obtained interface information.

4. The method according to claim 3, wherein,
the media service recreating the multicast channel according to the obtained interface information comprises:
the media server obtaining port information of the interface identified by the interface information according to the obtained interface information;
the media server obtaining the multicast address of the multicast channel;
the media server recreating the multicast channel from the port identified by the port information to the multicast group identified by the multicast address.

5. The method according to any of claims 1-4, wherein,
the method is applied in a static multicast mode.

6. A media server, comprising a service processing module, a database module and a live distributing module, wherein,
the service processing module is configured to receive a command from a client, which carries a channel number and a multicast address of a multicast channel to be created and an interface address of the media server for creating the multicast channel, bind, according to the command for creating the multicast channel, the multicast channel identified by the channel number to the interface identified by the interface address of the media server, transmit a resource apply request to the database module, and transmit a creation command to the live distributing module;
the database module is configured to obtain port information of the interface identified by the interface address of the media server according to the resource apply request transmitted by the service management module, and returning the port information to the service processing module;
the live distributing module is configured to receive the creation command transmitted by the service processing module, create the multicast channel from a port identified by the port information to a multicast group identified by the multicast address according to the port information and the multicast address carried in the creation command.

7. The media server according to claim 6, wherein,
the database module is further configured to receive a binding relation between the multicast channel and the interface transmitted by the service processing module, and store a binding relation table of the multicast channel and the interface.

8. The media server according to claim 7, wherein,
the service processing module is further configured to regularly detect whether an abnormality of the created multicast channel occurs, if it is detected that the abnormality of the multicast channel occurs, enquire the database module to obtain interface information bound to the multicast channel and port information of an interface identified by the interface information, and transmit a recreation command to the live distributing module;
the live distributing module is further configured to receive the recreation command transmitted by the service processing module, recreate the multicast channel from the port identified by the interface information to the multicast group identified by the multicast address according to the port information and the multicast address of the multicast channel carried in the recreation command.

9. The media server according to any of claims 6-8, wherein,
the media server is applied in a static multicast mode.

10. A system for creating a multicast channel, comprising a media server and a client, wherein,
the media server in use is the media server according to any of claims 6-9;
the client is configured to transmit a command for creating a multicast channel to the media server.
